# EUROPEAN PATENT SPECIFICATION

(11) **EP 1 868 344 B1**
(45) Date of publication and mention of the grant of the patent: **01.02.2012**
(21) Application number: 07011523.3
(22) Date of filing: 13.06.2007
(51) Int. Cl.: H04L 29/06

(54) **Providing context information in reponse to selecting tags**
Bereitstellung von Kontextinformationen in Reaktion auf die Auswahl von Kennzeichnungen
Fourniture d'informations de contexte en réponse à la sélection d'étiquettes

(30) Priority: 14.06.2006 US 452694
(43) Date of publication of application: 19.12.2007
(73) Proprietor: Avaya Inc., Basking Ridge, NJ 07920-2311 (US)
(72) Inventor: Sylvain, Dany, Gatineau Quebec J8T 6A6 (CA)
(74) Representative: Kelly, Madeleine

(56) References cited:
- EP-A- 1 283 478
- EP-A- 1 521 439
- WO-A-2005/104481
- KR-A- 20030 026 395

## Description

### Field of the Invention

The present invention relates to telecommunications, and in particular to initiating a telephony call to a called party and providing context information to a called party or to network resources for a call initiated in response to selecting tags in electronic documents and software applications.

### Background of the Invention

As the Internet and associated web services evolve, there is a movement to associate telephony calls with certain web applications. In click-to-call scenarios, a tag to initiate a telephony call may be provided in a web page, which is supported by a web client, such as a web browser. The tag may be a link or icon associated with a communication address. Upon selecting the tag, the web client may initiate the telephony call to a destination associated with the tag, wherein a voice session is automatically established between the user and a called party associated with the web page. The ability to initiate telephony calls by simply clicking on a tag in a web page provides significant value to users and content providers. EP1283478-A1 discloses a click-to-call technology as described above.

In many instances, the called party would benefit from knowing the application or electronic document, from which the click-to-call call was initiated. For example, if the call was initiated by the user clicking on a tag in a web page, a sales agent to which the call was directed would likely benefit from knowing what web page the user was viewing when the call was initiated. The web page may identify the product or service of interest to the user and allow the sales agent to more quickly determine the user's interest and perhaps obtain additional information for the user. If the call to a remote party was initiated by the user clicking on a tag in an email received from the remote party, the remote party to which the call was directed would likely benefit from knowing that the user initiated the call in response to the email.

In addition to providing such context information, the called party would also benefit from receiving additional information about the user in association with the call to avoid having to obtain the information from the user during the call. The additional information that would benefit the called party may range from user preferences and availability to a preferred language and credit card information.

Network resources may also benefit from having access to context information. For example, a call center may support various areas and services, such as those relating to customer service, technical support, operator services, and the like. With access to context information, the network resources for the call centers may use the context information to route the call to the most appropriate agent.

In addition to web clients, click-to-call capability may be supported in various other software applications, such email, instant messaging, word processing, presentation, and spreadsheet applications. Tags for initiating a telephony call may be provided in any electronic document, such as web pages, emails, instant messages, word processing documents, or spreadsheets, as well as in the application interfaces. The called party or network resources may benefit from knowing that the call was initiated from an electronic document or software application in general or a particular electronic document. Accordingly, there is a need for a technique to provide context information, which is related to the software entity from which a click-to-call call was initiated, in association with a call to a called party or to network resources associated with the call. There is a further need for a technique to provide additional user information along with the context information.

### Summary of the Invention

The present invention provides context information to a called party or network resources when a caller initiates a click-to-call (C2C) call. The context information bears on the reason for the call, and in particular to the software entity from which the C2C call was initiated when a user selected a C2C tag in the software entity. Having access to the context information, the called party can readily ascertain the reason for the call to better respond to the caller, and the network resources may better route the call to an appropriate called party. The context information may identify or include information from the software entity, such an electronic document or software application from which the C2C call was initiated. Electronic documents may include web pages, emails, instant messages, word processing documents, spreadsheets, and the like. Software applications may support instant messaging, word processing, presentations, and spreadsheets. In addition to providing context information, the caller may provide additional information that is beneficial for the called party or the network resources. To provide the context information and the additional information, mechanisms may be employed to allow the caller to selectively invoke delivery of the context information as well as the additional information.

Those skilled in the art will appreciate the scope of the present invention and realize additional aspects thereof after reading the following detailed description of the preferred embodiments in association with the accompanying drawing figures.

### Brief Description of the Drawing Figures

The accompanying drawing figures incorporated in and forming a part of this specification illustrate several aspects of the invention, and together with the description serve to explain the principles of the invention.
FIGURE 1 is a block representation of a communication environment and operation thereof according to a first embodiment of the present invention.
FIGURE 2 illustrates a web page, including a click-to-call tag, displayed on a web browser.
FIGURE 3 illustrates a click-to-call web page provided upon selecting the click-to-call tag provided in the web page illustrated in Figure 2.
FIGURES 4A and 4B illustrate a communication flow for an indirect call initiation technique according to the embodiment of Figure 1.
FIGURE 5 is a block representation of a communication environment and operation thereof according to a second embodiment of the present invention.
FIGURE 6 is a block representation of a communication environment and operation thereof according to a third embodiment of the present invention.
FIGURE 7 is a block representation of a communication environment and operation thereof according to a fourth embodiment of the present invention.
FIGURE 8 is a block representation of a click-to-call server according to one embodiment of the present invention.
FIGURE 9 is a block representation of a user terminal according to one embodiment of the present invention.

### Detailed Description of the Preferred Embodiments

The embodiments set forth below represent the necessary information to enable those skilled in the art to practice the invention and illustrate the best mode of practicing the invention.

The present invention provides context information to a called party or to network resources when a caller initiates a click-to-call (C2C) call. The context information bears on the reason for the call, and in particular to the software entity from which the C2C call was initiated when a user selected a C2C tag in the software entity. Having access to the context information, the called party can readily ascertain the reason for the call to better respond to the caller, and the network resources may better route the call to an appropriate called party. The context information may identify or include information from the software entity, such an electronic document or software application from which the C2C call was initiated. Electronic documents may include web pages, emails, instant messages, word processing documents, spreadsheets, and the like. Software applications may support instant messaging, word processing, presentations, and spreadsheets. In addition to providing context information, the caller may provide additional information that is beneficial for the called party or the network resources. To provide the context information and the additional information, mechanisms may be employed to allow the caller to selectively invoke delivery of the context information as well as the additional information.

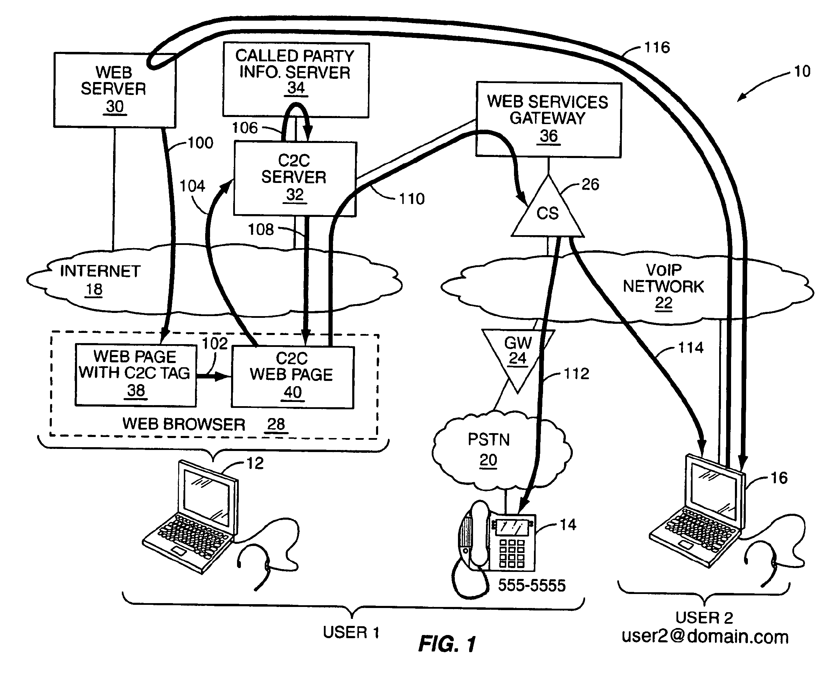

With reference to Figure 1, a communication environment 10 is illustrated, wherein a C2C call can be initiated from a user element 12, which is associated with User 1. Although the C2C call is initiated from the user element 12, the call is actually established between a public switched telephone network (PSTN) terminal 14, which is also associated with User 1, and a called party terminal 16, which is associated with User 2. Assume that the PSTN terminal 14 is associated with a directory number of 555-5555, and the called party terminal of User 2 is associated with a uniform resource locator (URL) of user2@domain.com. Both the user element 12 and the called party terminal 16 may have multimedia capability, which may include support for voice-based communications. As such, the user element 12 and the called party terminal 16 are illustrated with headsets, which include a microphone and speaker for facilitating voice communications.

The user element 12 is connected to the Internet 18. The PSTN terminal 14 of User 1 is directly coupled to a PSTN 20, which is connected to a voice over packet (VoP) network 22 via an appropriate gateway (GW) 24. The called party terminal 16 is coupled directly or indirectly to the VoP network 22, such that voice-based communications may be established between the PSTN terminal 14 and the called party terminal 16 via the PSTN 20 and the VoP network 22. In the illustrated embodiment, assume there is a desire or need to establish calls to the called party terminal 16 from the PSTN terminal 14, instead of from the user element 12. A call server (CS) 26 is associated with the VoP network 22. The call server 26 is able to communicate with the gateway 24 and the called party terminal 16 to facilitate calls therebetween. The user element 12 includes a web browser 28, which is capable of sending web page requests to a web server 30 and receiving corresponding web pages in return via the Internet 18. The web browser 28 may also be able to communicate with a C2C server 32, which is configured to process C2C call requests. For the present invention, the C2C server 32 may access a called party information server 34 to obtain additional information associated with the called party. The C2C server 32 may cooperate with a web services gateway 36, which is configured to receive instructions from the C2C server 32 and provide corresponding instructions to the communication server 26. Again, the communication server 26 will respond to these instructions by establishing calls over the VoP network 22, and perhaps through the PSTN 20 via the gateway 24.

With continued reference to Figure 1, a high level communication flow is provided for a scenario where User 1 triggers initiation of a call to be established between the PSTN terminal 14 of User 1 and the called party terminal 16 of User 2. In particular, the initiated call is a C2C call that was initiated from a software entity, and context information related to the software entity is provided to the called party terminal 16 for review by User 2.

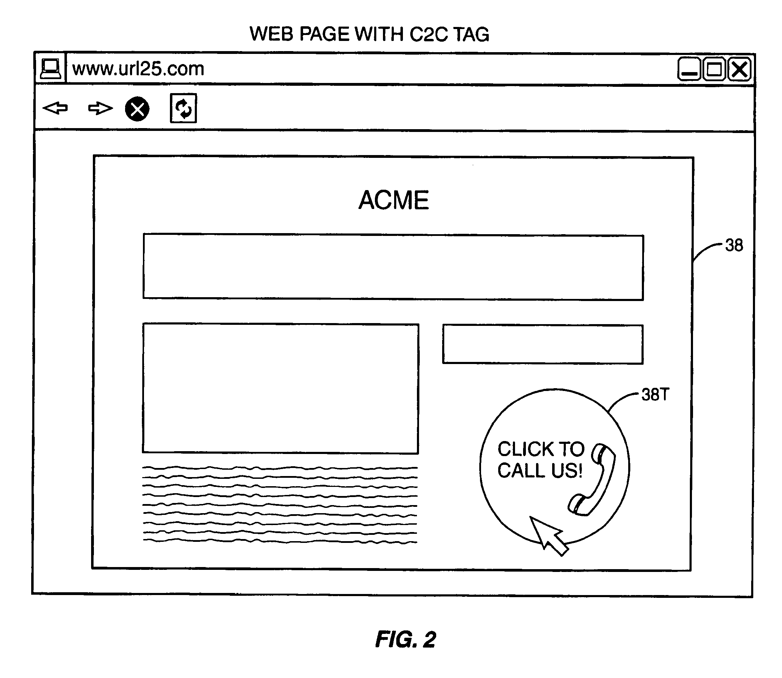

Assume that the web browser 28 has retrieved a web page 38, which has a C2C tag from the web server 30 (step 100). An exemplary web page 38 having an exemplary C2C tag 38T is illustrated in Figure 2. If User 1 selected the "Click to Call Us!" C2C tag 38T, the web browser 28 may open a new browser window (step 102) and send a request to the designated C2C server 32 (step 104). The request will include context information related to the referring web page 38 from which the C2C call process was initiated. From the request, the C2C server 32 will recognize that User 2 or the called party terminal 16 will be involved with the call, and as such, the C2C server 32 may access the called party information server 34 to obtain information related to User 2 (step 106). The information related to User 2 may be static information, such as contact information, reference information, a picture ID, as well as dynamic information, such as presence information, location information, and the like associated with User 2.

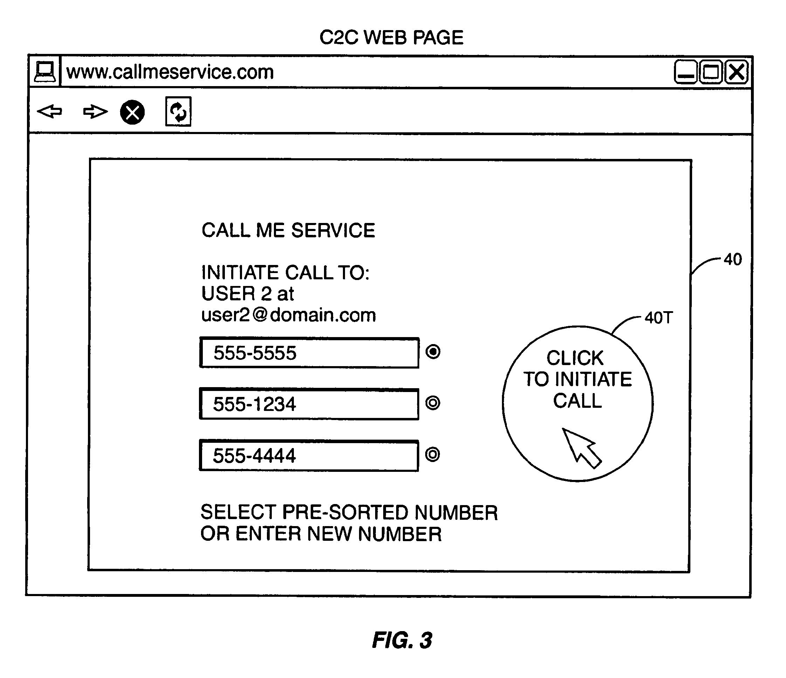

The C2C server 32 will provide a C2C web page 40 for the web browser 28 to display (step 108). An exemplary C2C web page 40 is illustrated in Figure 3. The C2C web page 40 may provide the additional information retrieved from the called party information server 34 as well as present User 1 with the ability to initiate the C2C call with User 2. User 1 may be able to select or identify an associated terminal to user for the C2C call, as well as provide additional information to provide to the called party terminal 16 or associated network resources along with the context information. As illustrated, assume User 1 has selected the directory number 555-5555, which is associated with the PSTN terminal 14, to use for the C2C call. User 1 will select the "Click to Initiate Call" tag 40T of the C2C web page 40 to initiate the C2C call. Notably, the C2C server 32 may set cookies in the user element 12, such that the cookies will automatically use a prior terminal selection for the specified C2C call unless otherwise specified.

Upon receipt of an indication that the "Click to Initiate Call" tag 40T was selected by User 1 in the C2C web page 40, the C2C server 32 will interact directly or indirectly with the communication server 26 to effect establishment of the call via the web services gateway 36. Along with providing instructions to the communication server 26 to establish the call, the C2C server 32 also provides context information and any other additional information provided by User 1 (step 110). In response, the communication server 26 will interact with the PSTN 20 via the gateway 24 (step 112), as well as the called party terminal 16 (step 114) to establish a bearer path for the call between the PSTN terminal 14 and the called party terminal 16 through the PSTN 20 and the VoP network 22. The bearer path is not illustrated.

During establishment of the call, the communication server 26 will provide the context information and any additional information provided by User 1 to the called party terminal 16. Having access to the context information and any additional information, the web server 30 may be accessed to obtain information including the web page 38 or information associated with the web page 38 (step 116). As such, User 2 may receive context information in association with a C2C call, wherein the context information bears on the software entity from which the C2C call was initiated. Additional information provided by User 1 may also be received by User 2. The context information and additional information provides User 2 with the context associated with the call, and may allow User 2 to obtain further information associated with the C2C call.

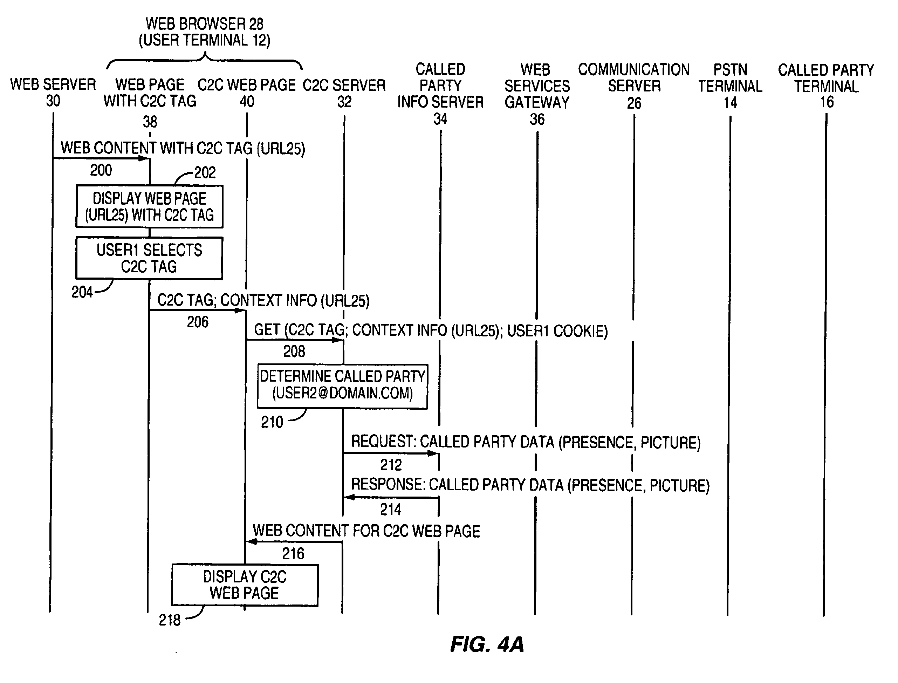

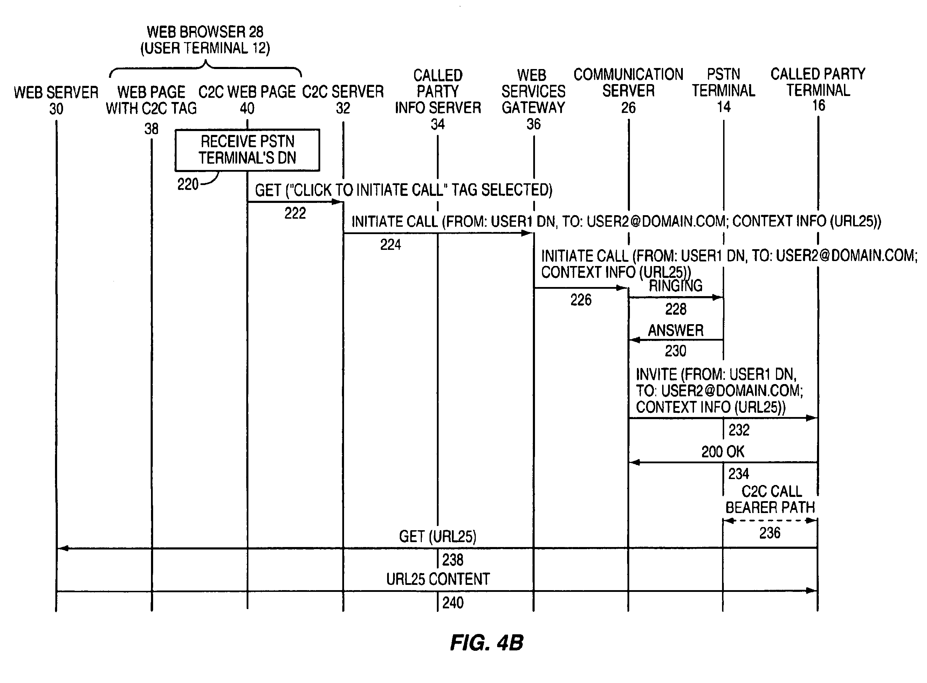

With reference to Figures 4A and 4B, a detailed communication flow is provided for the scenario illustrated in Figure 1. Initially, the web server 30 will provide web content (URL25) with a C2C call tag to the web browser 28 of the user terminal 12 (step 200). In response, a corresponding web page 38 with the C2C call tag is displayed to User 1 (step 202). When User 1 selects the C2C tag 38T in the web page 38 (step 204), the web browser 28 will open a window for the C2C web page 40 and provide common text information identifying the referring web page 38 (URL25) (step 206). Web browser 28 will send a Get message to the C2C server 32 indicating that the C2C tag 38T was selected and providing the context information identifying the referring web page 38, URL25 (step 208). The Get information may include any cookies (User 1 Cookie) previously stored on the user terminal 12 for the C2C server 32. The C2C server 32 will determine the called party (step 210) and may request called party data from the called party information server 34 (step 212). The called party information server 34 will respond by sending any available called party data back to the C2C server 32 (step 214). The C2C server 32 may use all or a portion of the called party data in creating web content for the C2C web page 40. Once the web content for the C2C web page 40 is created, the web content is sent to the web browser 28 for displaying in the newly opened window (step 216).

Upon receipt, the web browser 28 will display the C2C web page 40 in the newly opened window (step 218). User 1 may enter the PSTN terminal's directory number (step 220). Alternatively, if the user is reusing the C2C service, the directory number used previously may have been memorized via a browser cookie and may be pre-populated in the C2C web page. When User 1 selects the "Click to Initiate Call" tag 40T, the web browser 28 will send a Get message to the C2C server 32 indicating that the "Click to Initiate Call" tag 40T has been selected (step 222). The C2C server 32 will send an Initiate Call message to the web services gateway 36 (step 224), which will forward the Initiate Call message to the communication server 26 (step 226). The Initiate Call messages will identify the directory number, 555-5555, associated with User 1 and to be used for the C2C call; the address for the called party terminal 16; the context information (URL25) associated with the referring web page; and any additional information provided by User 1 (not shown). Upon receipt of the Initiate Call message, the communication server 26 will initiate ringing of the PSTN terminal 14 (step 228), which when answered will respond with an Answer message (step 230). The communication server 26 may also send a Session Initiation Protocol (SIP) Invite or other session initiation message toward the called party terminal 16 (step 232). The Invite will identify the call being initiated from the PSTN terminal 14 and intended for the called party terminal 16. The Invite will also include the context information (URL25) associated with the C2C call.

In response to receiving the Invite and upon being answered by User 2, the called party terminal 16 will respond with a 200 OK message (step 234). The intermediate call signaling is not shown for conciseness and readability; however, those skilled in the art will recognize there is call signaling necessary to facilitate establishment of a bearer path between the PSTN terminal 14 and the called party terminal 16 for the C2C call (step 236).

At this point, the called party terminal 16 may process the context information, present the context information to User 2, and the like. In one embodiment, either automatically or in response to instructions from User 2, the called party terminal 16 will use the context information to obtain information from the web server 30. As illustrated, the called party terminal 16 will send a Get message including the context information (URL25) to request the web page 38 from which the C2C call was triggered (step 238). The web server will receive the Get message and respond with the web content associated with the web page 38 (step 240).

In the above example, context information was provided to a called party associated with a C2C call. The context information may also be provided to the terminal associated with User 1, if the terminal is capable of receiving context information. In the example, the PSTN terminal 14 was not capable of receiving the context information, and as such, the communication server 26 made no effort to provide the context information to the PSTN terminal 14. Further, the context information as well as the additional information may be used by network resources, such as the communication server 26. The following example illustrates how context information may be used by a call center to select an appropriate agent to use when handling a C2C call.

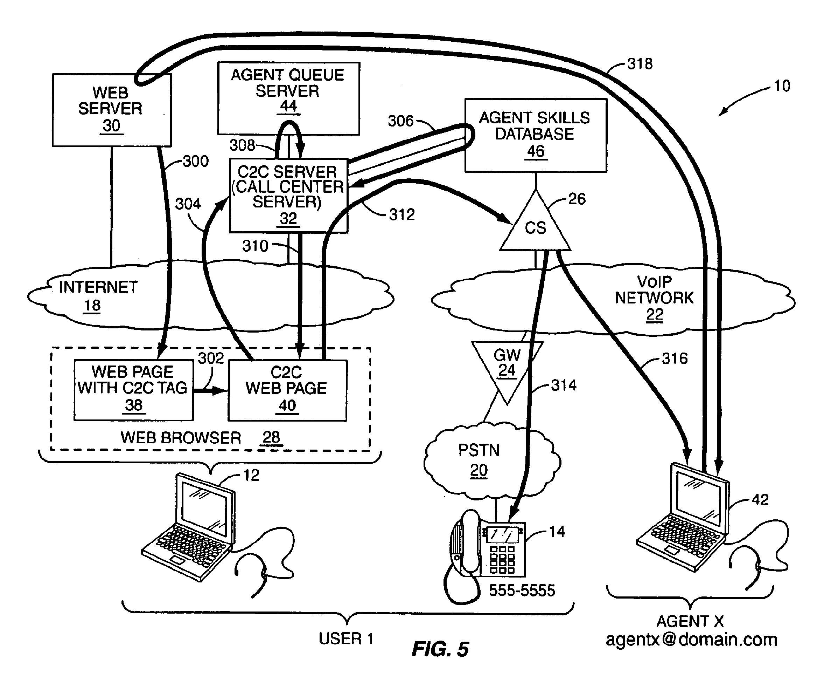

With reference to Figure 5, an agent terminal 42 is shown in place of the called party terminal 16. The C2C server 32 is configured as a call center server, which serves calls to multiple available agent terminals 42. Queuing information for the various agent terminals 42 may be provided by an agent queue server 44, and agent skills and responsibilities may be provided by an agent skills database 46. As such, the C2C server 32 may access the agent queue server 44 and the agent skills database 46 to identify a soon to be available agent terminal 42, as well as make sure that the agent at the agent terminal 42 has the appropriate skill set in light of the context information. As with the scenario of Figures 1, 4A, and 4B, the C2C call is initiated from User 1's user terminal 12, and the call is actually established from the PSTN terminal 14. As illustrated in Figure 5, the call is established between the PSTN terminal 14 and the agent terminal 42.

Initially, assume the web page 38 with the C2C tag 38T is received from a web server 30 (step 300). In this instance, the C2C tag 38T is associated with a call center supported by the C2C server 32. Upon the user selecting the C2C tag 38T, the web browser 28 may open a new window (step 302) and send a corresponding request to the C2C server 32 (step 304). The request will include the context information associated with the web page 38. The C2C server 32 will recognize that the request relates to a C2C call, and in response may access the agent skills database 46 to identify an appropriate agent to handle the C2C call in light of the context information (step 306).

The C2C server 32 may also access the agent queue server 44 to determine an available, next available, or soon to be available agent for the C2C call. The C2C server 32 will then create the C2C web page 40 and send corresponding content to the web browser 28 for display in the newly opened window (step 310). The web page 40 may include the initiate call tag 40T as well as various fields for selecting a terminal associated with User 1 to use for the call and to use for adding information to provide along with the context information. In this example, the context information may include customer numbers, ordering numbers, supplemental order information, special requests, credit card information, and the like. The type and amount of additional information is limited only by design choice.

Notably, the C2C web page 40 may provide queuing status or queue information received from the agent queue server 44 to provide User 1 with sufficient information to determine when the call will be initiated, or if the call is immediately initiated, how long the wait is likely to be. The C2C server 32 may update the C2C web page 40 periodically to update queue status. Those skilled in the art will recognize that the C2C web page 40 and the web page 38 may essentially be one and the same page, wherein User 1 may not be provided with other information or a second opportunity to actually initiate the call. As such, User 1 would provide any additional information and the call would be initiated upon clicking the C2C call tag 38T. The described embodiments are enhanced simply to illustrate the possible enhancements to the basic concept of the present invention.

Once the initiate call tag 40T is selected, the web browser 28 will send a request back to the C2C server 32, which may initiate the call directly or through the communication server 26 as illustrated (step 312). The communication server 26 will provide the requisite call signaling toward the PSTN terminal 14 and the agent terminal 42 to establish a bearer path for the C2C call between the PSTN terminal 14 and the agent terminal 42 (steps 314 and 316). In one embodiment, the C2C server 32 or the communication server 26, whichever is directly responsible for call establishment, may present the call to the PSTN terminal 14, and upon User 1 answering the call, will present the call to the agent terminal 42. When the agent associated with the agent terminal 42 answers the call, the bearer path is established between the PSTN terminal 14 and the agent terminal 42. As the call is being presented to the agent terminal 42, the context information and any additional information provided by User 1 is presented to the agent terminal 42. The context information and the additional information may be used to obtain other information related to the C2C call. As illustrated, the context information is used to obtain the web page 38 from which the C2C call was initiated (step 318). The context information and the additional information may be used to obtain other records associated with User 1 from the web server 30 or other databases to assist the agent in better serving User 1.

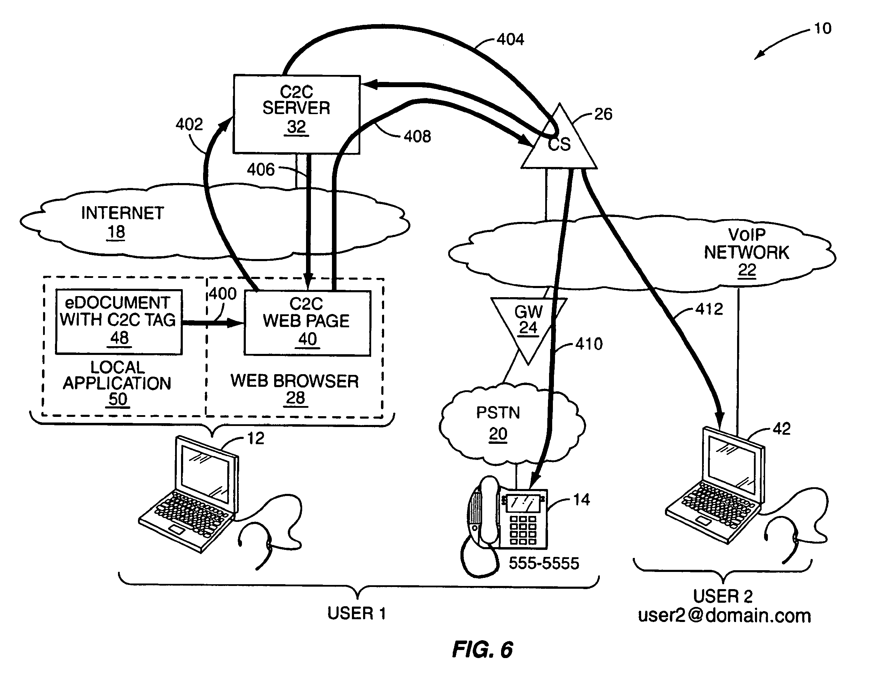

With reference to Figure 6, another embodiment of the present invention is illustrated. In this embodiment, an electronic document (eDocument) 48 other than a web page provides the C2C tag. The illustrated eDocument 48 may be an email, instant message, word processing document, spreadsheet, or presentation document having a C2C tag. While User 1 is viewing the eDocument 48 in an appropriate local application 50, the web browser 28 is open and provided with context information associated with the eDocument. The web browser 28 will open a window (step 400) and send a request for a C2C web page to the C2C server 32 (step 402). The request will include the context information. In this embodiment, the C2C server 32 is capable of accessing the communication server 26 or other presence system to obtain presence information pertaining to the relative availability of User 2 for communications or information bearing on how a call to User 2 should be directed (step 404). The C2C server 32 will create and provide the content for a C2C web page 40 back to the web browser 28 (step 406). The C2C web page 40 will include the initiate call tag 40T and may include the presence information for User 2. Presence information may aid User 1 in determining whether to move forward with the C2C call.

Assuming User 1 wants to move forward with the call, the C2C web page 40 may provide the opportunity for User 1 to select an associated terminal to use for the call, as well as provide additional information to present to the network resources, or in this case, to the called party terminal 16 along with the C2C call. When the initiate call tag 40T is selected by User 1, the web browser 28 may send a request toward the C2C server 32, which may interact with the communication server 26 to establish the C2C call (step 408). The communication server 26 will initiate the call toward the PSTN terminal 14 (step 410), and when answered by User 1 initiate the call toward the called party terminal 16 (step 412). When User 2 answers, the bearer path is established between the PSTN terminal 14 and the called party terminal 16. Notably, the context information as well as any additional information may be presented to the called party terminal 16 as the call is being established. The called party terminal 16 may present the context information and additional information to User 2, such that User 2 can recognize that the C2C call was initiated by User 1 while User 1 was reviewing the particular electronic document 48. Although not depicted, the context information could have been processed by the communication server 26 and used to determine the best communication terminal of User 2 to use for the C2C call. Using context information as well as presence information provides a powerful tool in making sure that User 2 is available for the call and directing the call in a manner most appropriate for the call in light of the context information.

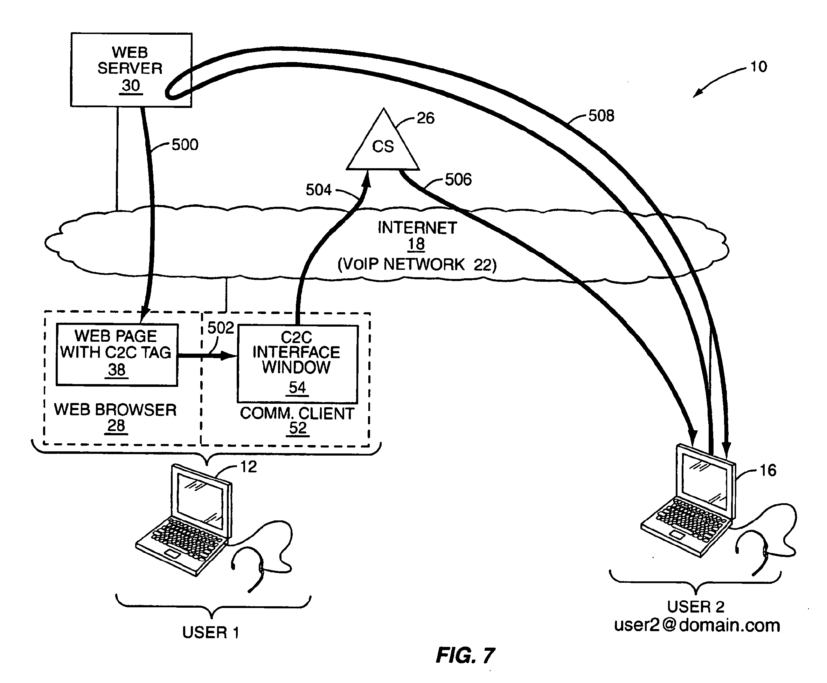

With reference to Figure 7, assume the Internet 18 and the VoP network 22 are combined or are one and the same. Further assume that user element 12 is capable of supporting a C2C call directly when the web page 38 having the C2C tag 38T is downloaded to the web browser 28 (step 500). When the C2C tag 38T is selected, the web browser 28 may open a new window and instruct a communication client 52 to initiate a C2C call (step 502). The web browser 28 will provide the context information associated with the web page 38 to the communication client 52 (step 502). The communication client 52 may open a C2C interface window 54, which will include an initiate call tag. From the C2C interface window 54, the user will be able to select an associated terminal to user for the C2C call, as well as provide additional information to provide along with the context information. In this instance, User 1 will select user element 12 for the C2C call. When User 1 selects the initiate call tag, instructions along with the context information are directly or indirectly provided to the communication server 26 to initiate a call to the called party terminal 16 (step 504). The communication server 26 will coordinate with the called party terminal 16 to terminate the call (step 506), such that a bearer path is established between the communication client 52 of the user element 12 and the called party terminal 16.

The context information and any additional information may be used by the communication server 26 when routing or otherwise processing the call. Context information and any additional information may also be provided to the called party terminal 16, which may automatically act on the context information or the additional information, or may simply present the context information or the additional information to User 2. In either case, the context information or additional information may be used to obtain further information related to the C2C call or User 1. As illustrated, the context information is used to access the web server 30 to obtain the web page 38 from which the C2C call was initiated (step 508).

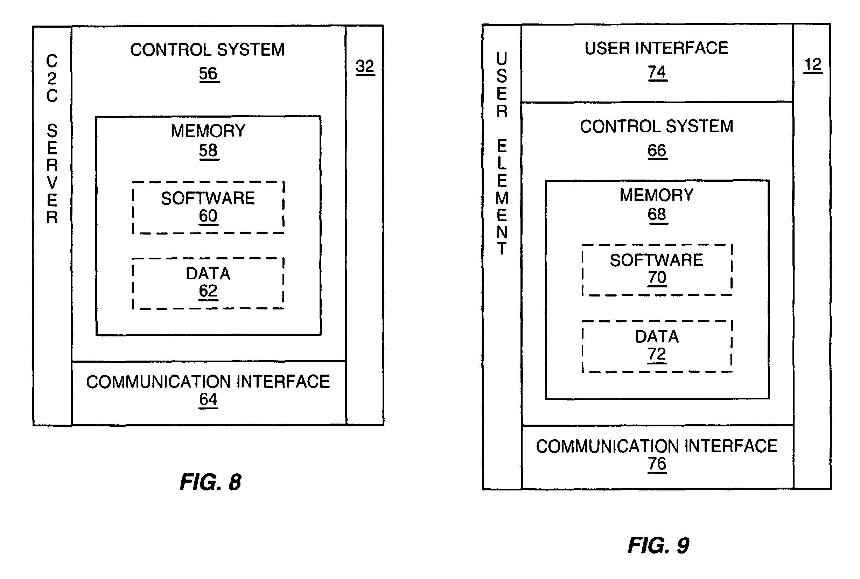

With reference to Figure 8, an exemplary CSC server 32 is illustrated. The CSC serer 32 may include a control system 56 with sufficient memory 58 for the requisite software 60 and data 62 to operate as described above. The control system 56 may also be associated with any number of communication interfaces 64, to facilitate communications with any variety of networks.

With reference to Figure 9, an exemplary user element 12 is illustrated. The user element 12 may include a control system 66 with sufficient memory 68 for the requisite software 70 and data 72 to operate as described above. The software 70 may support various applications supporting various electronic documents, wherein certain of the applications or electronic documents may represent software entities. The software 70 may also support all or a portion of the communication client 52. The control system 66 may also be associated with an appropriate user interface 74 as well as any number of communication interfaces 76, to facilitate communications with any variety of networks.

## Claims

1. A method comprising:
• displaying via a user interface an electronic document having a tag, which when selected triggers initiation of a click-to-call call;
• obtaining (104, 206, 304, 402, 502) context information for the click-to-call call and said context information bearing on a software entity from which the click-to-call call was initiated:
• initiating the click-to-call call when a user selects the tag; and
• sending (110, 232, 312, 408, 504) said context information over a communication network in association with initiating the click-to-call call
**characterised by**
the obtained context information is created from information associated with the electronic document or a software application supporting the electronic document.

2. An apparatus comprising:
• at least one communication interface (12);
• a user interface;
• a control system (32) associated with the at least one communication interface and adapted to:
• display via the user interface an electronic document having a tag, which when selected triggers initiation of a click-to-call call;
• obtain context information for the click-to-call call, and said context information bears on a software entity from which the click-to-call call was initiated;
• initiate the click-to-call call when a user selects the tag; and
• send said context information over a communication network (18, 22) in association with initiating the click-to-call call;
**characterised in that**:
the control system being adapted to obtain the context information being created from information associated with the electronic document or a sofware application supporting the electronic document.

3. The apparatus of claim 2 wherein said context information is arranged to be sent to a called party terminal.

4. The apparatus of claim 2 wherein said context information is arranged to be sent to a network resource, which processes the click-to-call call based on said context information.

5. The apparatus of claim 2 wherein the software entity is a software application supporting at least one of the group consisting of email, instant messaging, word processing, presentations, and spreadsheets.

6. The apparatus of claim 2 wherein the software entity is an electronic document of at least one of the group consisting of an email, an instant message, a word processing document, a presentation document, and a spreadsheet.

7. The apparatus of claim 2 wherein the software entity is a web browser (28).

8. The apparatus of claim 2 wherein the software entity is a web page (40).

9. The apparatus of claim 2 wherein the control system (32) is further adapted to:
• obtain additional Information from the user initiating the click-to-call; and
• send the additional information over the communication network in association with initiating the click-to-call call.

10. The apparatus of claim 10 wherein the control system (32) is further adapted to:
• receive additional information from the user; and
• send the additional information along with said context Information.

11. The apparatus of claim 2 wherein to obtain said context information, the control system (32) is further adapted to receive from a user element an indication that the click-to-call tag has been selected by the user, and to send the context information over the communication network the control system Is further adapted to establish the click-to-call call between the user element and a called party terminal (16).

12. The apparatus of claim 2 wherein the click-to-call call is initiated from a first user element (12) of the user, and the click-to-call call is established between a second user element (14) of the user and a called party terminal (16).

13. The apparatus of claim 2 wherein the click-to-call call is initiated from a first user element of the user, and the click-to-call call is established between the first user element (12) and a called party terminal (16).

## Patentansprüche

1. Verfahren, das Folgendes beinhaltet:
• Anzeigen eines elektronischen Dokuments mit einem Etikett über eine Benutzeroberfläche, das nach dem Selektieren die Einleitung eines Click-to-Call-Anrufs auslöst;
• Einholen (104, 206, 304, 402, 502) von Kontextinformationen für den Click-to-Call-Anruf, wobei die genannten Kontextinformationen auf eine Software-Entität einwirken, von der der Click-to-Call-Anruf eingeleitet wurde;
• Einleiten des Click-to-Call-Anrufs, wenn ein Benutzer das Etikett selektiert; und
• Senden (110, 232, 312, 408, 504) der genannten Kontextinformationen über ein Kommunikationsnetzwerk in Verbindung mit dem Einleiten des Click-to-Call-Anrufs,
**dadurch gekennzeichnet, dass** die eingeholten Kontextinformationen von Informationen erzeugt werden, die mit dem elektronischen Dokument oder mit einer das elektronische Dokument unterstützenden Software-Anwendung assoziiert sind.

2. Vorrichtung, die Folgendes umfasst:
• wenigstens eine Kommunikationsschnittstelle (12);
• eine Benutzeroberfläche;
• ein Steuersystem (32), das mit der wenigstens einen Kommunikationsschnittstelle assoziiert und wie folgt ausgelegt ist:
• Anzeigen eines elektronischen Dokuments mit einem Etikett über eine Benutzeroberfläche, das nach dem Selektieren die Einleitung eines Click-to-Call-Anrufs auslöst;
• Einholen von Kontextinformationen für den Click-to-Call-Anruf, wobei die genannten Kontextinformationen auf eine Software-Entität einwirken, von der der Click-to-Call-Anruf eingeleitet wurde;
• Einleiten des Click-to-Call-Anrufs, wenn ein Benutzer das Etikett selektiert; und
• Senden der genannten Kontextinformationen über ein Kommunikationsnetzwerk (18, 22) in Verbindung mit dem Einleiten des Click-to-Call-Anrufs,
**dadurch gekennzeichnet, dass**
das Steuersystem so ausgelegt ist, dass es die Kontextinformationen einholt, die von Informationen erzeugt wurden, die mit dem elektronischen Dokument oder mit einer das elektronische Dokument unterstützenden Software-Anwendung assoziiert sind.

3. Vorrichtung nach Anspruch 2, wobei die genannten Kontextinformationen zum Senden zum Endgerät einer angerufenen Partei bestimmt sind.

4. Vorrichtung nach Anspruch 2, wobei die genannten Kontextinformationen zum Senden zu einem Netzwerkbetriebsmittel bestimmt sind, das den Click-to-Call-Anruf auf der Basis der genannten Kontextinformationen verarbeitet.

5. Vorrichtung nach Anspruch 2, wobei die Software-Entität eine Software-Anwendung ist, die wenigstens ein Mitglied der Gruppe bestehend aus Email, Instant-Messaging, Textverarbeitung, Präsentationen und Kalkulationstabellen unterstützt.

6. Vorrichtung nach Anspruch 2, wobei die Software-Entität ein elektronisches Dokument von wenigstens einem Mitglied der Gruppe bestehend aus einer Email, einer Instant-Message, einem Textverarbeitungsdokument, einem Präsentationsdokument und einer Kalkulationstabelle ist.

7. Vorrichtung nach Anspruch 2, wobei die Software-Entität ein Web-Browser (28) ist.

8. Vorrichtung nach Anspruch 2, wobei die Software-Entität eine Webseite (40) ist.

9. Vorrichtung nach Anspruch 2, wobei das Steuersystem (32) ferner ausgelegt ist zum:
• Einholen zusätzlicher Informationen von dem den Click-to-Call-[Anruf] einleitenden Benutzer; und
• Senden der zusätzlichen Informationen über das Kommunikationsnetz in Verbindung mit dem Einleiten des Click-to-Call-Anrufs.

10. Vorrichtung nach Anspruch 10 [sic], wobei das Steuersystem (32) ferner ausgelegt ist zum:
• Empfangen zusätzlicher Informationen vom Benutzer; und
• Senden der zusätzlichen Informationen zusammen mit den genannten Kontextinformationen.

11. Vorrichtung nach Anspruch 2, wobei das Steuersystem (32) zum Einholen der genannten Kontextinformationen ferner so ausgelegt ist, dass es eine Anzeige von einem Benutzerelement empfängt, dass das Click-to-Call-Etikett vom Benutzer selektiert wurde, und wobei das Steuersystem zum Senden der Kontextinformationen über das Kommunikationsnetzwerk ferner so ausgelegt ist, dass es den Click-to-Call-Anruf zwischen dem Benutzerelement und einem Endgerät (16) einer angerufenen Partei aufbaut.

12. Vorrichtung nach Anspruch 2, wobei der Click-to-Call-Anruf von einem ersten Benutzerelement (12) des Benutzers eingeleitet wird und der Click-to-Call-Anruf zwischen einem zweiten Benutzerelement (14) des Benutzers und einem Endgerät (16) einer angerufenen Partei aufgebaut wird.

13. Vorrichtung nach Anspruch 2, wobei der Click-to-Call-Anruf von einem ersten Benutzerelement des Benutzers eingeleitet wird und der Click-to-Call-Anruf zwischen dem ersten Benutzerelement (12) und einem Endgerät (16) einer angerufenen Partei aufgebaut wird.

## Revendications

1. Un procédé comprenant :
• l'affichage par l'intermédiaire d'une interface utilisateur d'un document électronique possédant une balise, qui, lorsqu'elle est sélectionnée, déclenche l'émission d'un appel cliquer pour appeler,
• l'obtention (104, 206, 304, 402, 502) d'informations contextuelles pour l'appel cliquer pour appeler et lesdites informations contextuelles portant sur une entité logicielle à partir de laquelle l'appel cliquer pour appeler a été émis,
• l'émission de l'appel cliquer pour appeler lorsqu'un utilisateur sélectionne la balise, et
• l'envoi (110, 232, 312, 408, 504) desdites informations contextuelles par l'intermédiaire d'un réseau de communication en association avec l'émission de l'appel cliquer pour appeler,
**caractérisé en ce que** les informations contextuelles obtenues sont créées à partir d'informations associées au document électronique ou à une application logicielle acceptant le document électronique.

2. Un appareil comprenant :
• au moins une interface de communication (12),
• une interface utilisateur,
• un système de commande (32) associé à la au moins une interface de communication et adapté de façon à :
• afficher par l'intermédiaire de l'interface utilisateur un document électronique possédant une balise, qui, lorsqu'elle est sélectionnée, déclenche l'émission d'un appel cliquer pour appeler,
• obtenir des informations contextuelles pour l'appel cliquer pour appeler et lesdites informations contextuelles portent sur une entité logicielle à partir de laquelle l'appel cliquer pour appeler a été émis,
• émettre l'appel cliquer pour appeler lorsqu'un utilisateur sélectionne la balise, et
• envoyer lesdites informations contextuelles par l'intermédiaire d'un réseau de communication (18, 22) en association avec l'émission de l'appel cliquer pour appeler,
**caractérisé en ce que** :
le système de commande est adapté de façon à obtenir les informations contextuelles qui sont créées à partir d'informations associées au document électronique ou à une application logicielle acceptant le document électronique.

3. L'appareil selon la Revendication 2 où lesdites informations contextuelles sont agencées de façon à être envoyées à un terminal de la partie appelée.

4. L'appareil selon la Revendication 2 où lesdites informations contextuelles sont agencées de façon à être envoyées à une ressource de réseau qui traite l'appel cliquer pour appeler en fonction desdites informations contextuelles.

5. L'appareil selon la Revendication 2 où l'entité logicielle est une application logicielle acceptant au moins une application du groupe se composant de courrier électronique, messagerie instantanée, traitement de texte, logiciel de présentation et tableur.

6. L'appareil selon la Revendication 2 où l'entité logicielle est un document électronique d'au moins un document du groupe se composant d'un message électronique, d'un message instantané, d'un document de traitement de texte, d'un document de logiciel de présentation et d'une feuille de calcul.

7. L'appareil selon la Revendication 2 où l'entité logicielle est un navigateur web (28).

8. L'appareil selon la Revendication 2 où l'entité logicielle est une page web (40).

9. L'appareil selon la Revendication 2 où le système de commande (32) est adapté en outre de façon à :
• obtenir des informations additionnelles provenant de l'utilisateur émettant [l'appel] cliquer pour appeler, et
• envoyer les informations additionnelles par l'intermédiaire du réseau de communication en association avec l'émission de l'appel cliquer pour appeler.

10. L'appareil selon la Revendication 10 [*sic*] où le système de commande (32) est adapté en outre de façon à :
• recevoir des informations additionnelles provenant de l'utilisateur, et
• envoyer les informations additionnelles conjointement avec lesdites informations contextuelles.

11. L'appareil selon la Revendication 2 où, pour obtenir lesdites informations contextuelles, le système de commande (32) est adapté en outre de façon à recevoir d'un élément d'utilisateur une indication que la balise cliquer pour appeler a été sélectionnée par l'utilisateur et à envoyer les informations contextuelles par l'intermédiaire du réseau de communication, le système de commande étant adapté en outre de façon à établir l'appel cliquer pour appeler entre l'élément d'utilisateur et un terminal de la partie appelée (16).

12. L'appareil selon la Revendication 2 où l'appel cliquer pour appeler est émis à partir d'un premier élément d'utilisateur (12) de l'utilisateur et l'appel cliquer pour appeler est établi entre un deuxième élément d'utilisateur (14) de l'utilisateur et un terminal de la partie appelée (16).

13. L'appareil selon la Revendication 2 où l'appel cliquer pour appeler est émis à partir d'un premier élément d'utilisateur de l'utilisateur et l'appel cliquer pour appeler est établi entre le premier élément d'utilisateur (12) et un terminal de la partie appelée (16).
